Europäisches Patentamt

European Patent Office

Office européen des brevets

(11) Veröffentlichungsnummer: **0 126 293**
**A1**

(12) **EUROPÄISCHE PATENTANMELDUNG**

(21) Anmeldenummer: **84104285.6**

(22) Anmeldetag: **16.04.84**

(51) Int. Cl.³: **B 60 P 3/34**

(30) Priorität: **21.04.83 DE 3314533**

(43) Veröffentlichungstag der Anmeldung: **28.11.84**
**Patentblatt 84/48**

(84) Benannte Vertragsstaaten: **BE DE FR GB NL**

(71) Anmelder: **Parthum, Klaus, Schulweg 9, D-8079 Egweil**
**(DE)**

(72) Erfinder: **Parthum, Klaus, Schulweg 9, D-8079 Egweil**
**(DE)**

(74) Vertreter: **Neubauer, Hans-Jürgen, Dipl.-Phys.,**
**Fauststrasse 30, D-8070 Ingolstadt (DE)**

(54) Campingfahrzeug.

(57) Campingfahrzeug (Wohnwagen, Campingmobil oder Huckepackaufsatz eines Campingmobils) mit wenigstens zwei Wohneinheiten, wobei über eine Einheit (Unterbau 2) wenigstens eine zweite Einheit (Schlafkojen 7, 8) auf Führungsschienen schiebbar ist und die Einheiten mit nach oben klappbaren Klappwänden versehen sind. Die Klappachsen der Klappwände am Unterbau (2) liegen unterhalb der Schiebekante der Schlafkojen (7, 8), so daß die Klappwände des Unterbaus (2) im zusammengeschobenen Zustand unter dem Bodenteil der Schlafkojen (7, 8) liegen. Wenigstens eine Klappwand der Schlafkojen (7, 8) ist im aufgeklappten und zusammengeschobenen Zustand mit verschiebbaren Dachplatten (14, 15) verbindbar, so daß beim Ausschieben der Schlafkojen (7, 8) zugleich die verschiebbaren Dachplatten (14, 15) mit ausgeschoben werden. Durch eine solche Anordnung ist eine zweckmäßige Anbringung der Innenausstattung möglich und die Handhabung, insbesondere das Aufstellen bei schlechter Witterung, wird erleichtert.

Herr

Klaus Parthum

Schulweg 9


8079 Egweil

Fauststraße 30
D-8070 Ingolstadt

Telefon (08 41) 7 24 12
Telegramm neupat Ingolstadt
Telex 5 5809 nepa d

P 48PA 84/26

Campingfahrzeug

Die Erfindung betrifft ein Campingfahrzeug (Wohnwagen, Campingmobil oder Huckepackaufsatz eines Campingmobils) nach dem Oberbegriff des Anspruchs 1.

Bei Campern geht der Trend insbesondere zum geräumigen, komfortablen Wohnwagen, der mit Hilfe eines Personenwagens an den gewünschten Zielort gezogen wird. Dort abgestellt bietet der Wohnwagen eine gegenüber Witterungseinflüssen relativ gut geschützte Behausung, wobei der Personenwagen uneingeschränkt weiter zur Verfügung steht. Diesen Vorteilen steht eine Reihe von Nachteilen gegenüber, die vor allem aus dem großen Raumbedarf und der Unförmigkeit eines Wohnwagens erwachsen. Für die meisten Wohnwagenbesitzer ist das Abstellen in der unbenutzten Zeit ein erhebliches Problem. Meist müssen dafür teuere Abstellplätze oder Garagen angemietet werden. Ein weiterer Nachteil ergibt sich beim Transport. Ein Gespann aus Personenwagen und Wohnwagen kann durch die große Länge, den hochliegenden Schwerpunkt des Wohnwagens und den großen Luftwiderstand wegen der verminderten Fahreigenschaften nur mit Anstrengung und Konzentration bei geringen Geschwindigkeiten fortbewegt werden. Zudem wird viel Treibstoff verbraucht. Obwohl Wohnwagen mit sehr großen Abmessungen angeboten werden, ist nur in Ausnahmefällen ein getrennter Wohn- und Schlafraum vorgesehen, da sonst beide Räume zu klein wären. Der Wohnraum muß daher jeden Abend durch Umbauten, wie Absenken des Tisches, Ausklappen von Bänken, Auflegen von Matratzen etc. in einen Schlafraum umgewandelt werden. Dies ist zum einen zeitraubend und aufwendig und zum anderen gestattet es nur ein wenig individuelles Ferienleben, da alle Wohnwagenbewohner, beispielsweise Erwachsene und Kinder, gleichzeitig zu Bett gehen müssen.

Um die Abmessungen eines Wohnwagens im unbenutzten Zustand und beim Transport zu verkleinern, sind eine Reihe von Lösungen bekannt:

Klappcaravans bestehen aus einem relativ niedrigen, wannenförmigen Unterbau mit Achse und Rädern, in und auf dem feste Klappwände und das Dach angebracht sind. Wenn der Klappcaravan benutzt werden soll, wird das Dach angehoben und die mit dem Unterbau über Scharniere verbundenen Klappwände zur Stehhöhe ausgeklappt. Die Bodenfläche bleibt dabei gleich, wodurch das Platzangebot im Vergleich zu den gewöhnlichen Wohnwagen nicht vergrößert wird.

Der sog. Faltcaravan ist ein relativ niedriger Anhänger, bei dem durch Ausklappen von Abdeckwänden die Bodenfläche vergrößert wird. Auf diese festen Bodenflächen wird dann eine Zeltkonstruktion aufgebaut. Den vorteilhaft geringen Abmessungen eines Faltcaravans stehen als Nachteile der sehr geringe Schutz gegen Witterungseinflüsse und der aufwendige und zeitraubende Auf- und Abbau und damit nur eine geringe Mobilität gegenüber. Weiter ist ein Wohnwagen bekannt (US-PS 3 709 551), der in Längsrichtung und in vertikaler Richtung gegenüber einem kleineren Transportzustand räumlich vergrößert werden kann. Dies geschieht dadurch, daß eine zentrale Dachplatte durch das Aufschwenken von mit einem mittleren Unterbau verbundenen Klappwänden angehoben wird. Nun können in Längsrichtung zu beiden Seiten, ähnlich wie Schubladen, die Bodenteile von Schlafkojen ausgeschoben werden. Diese Bodenteile bzw. die Führungsschienen sind gegenüber der Bodenplatte des mittleren Bereichs vertikal nach oben versetzt. Nach dem Ausschieben der Bodenteile der Schlafkojen können auch dort angebrachte Klappwände nach oben geklappt und im zentralen Dachbereich eingeschobene Dachplatten über die Schlafkojen gezogen werden. Eine solche Ausführung enthält jedoch eine Reihe von gravierenden Nachteilen, die insbesondere ein zweckmäßiges Anbringen der Innenausstattung und die Handhabung, besonders das Aufstellen bei schlechter Witterung, erschweren:

Die zentrale Dachplatte wird beim Aufstellen als erstes angehoben, wobei sich die über Seilzüge hochschwenkbaren Seitenklappteile aufstellen. Dazu ist es notwendig, daß die Seitenklappwände des mittleren Unterbaus in ihrer Klappstellung an oberster Stelle, d. h. über den Bodenteilen der Schlafkojen, angebracht sind. Hängeschränke, Klapptische etc., die an den seitlichen Klappwänden üblicherweise angebracht sind, müssen somit vor dem Zusammenlegen abgebaut und anderweitig verstaut werden, da die Klappwände eben auf den Schlafkojenbodenteilen bzw. den Matratzen, Decken etc. aufliegen. Es ist somit notwendig, die im zentralen Wohnbereich über der Klappachse angebrachten Einrichtungsgegenstände zum einen einfach abnehmbar zu gestalten, was eine Verteuerung bewirkt, und die aufgehängten Teile bei jedem Auf- und Abbauen auch tatsächlich abzunehmen und anderweitig zu verstauen. Ein Auf- und Abbau wird dadurch beschwerlich.

Durch Aufklappen der mittleren Klappwände wird das Dach entsprechend hoch gehoben. Die Linke und Rechte dieser Klappwände dürfen daher im zusammengeklappten Zustand höchstens bis zur Mitte des Wohnwagens reichen; sie können keinesfalls über die Mitte hinaus überlappend aufeinanderliegen, da sonst das gleichmäßige Anheben des mittleren Dachbereichs nicht möglich ist. Dies hat zur Folge, daß die Klapphöhe begrenzt ist (maximal auf die halbe Breite des Wohnwagens) bzw. die Klappachse am mittleren Unterbau für die Klappwände relativ hoch angebracht sein muß, um die notwendige Stehhöhe zu erreichen. Andererseits ist damit die Möglichkeit der Dachabsenkung eingeschränkt und der Wohnwagen ist trotz abgesenkten Daches nachteilig relativ hoch.

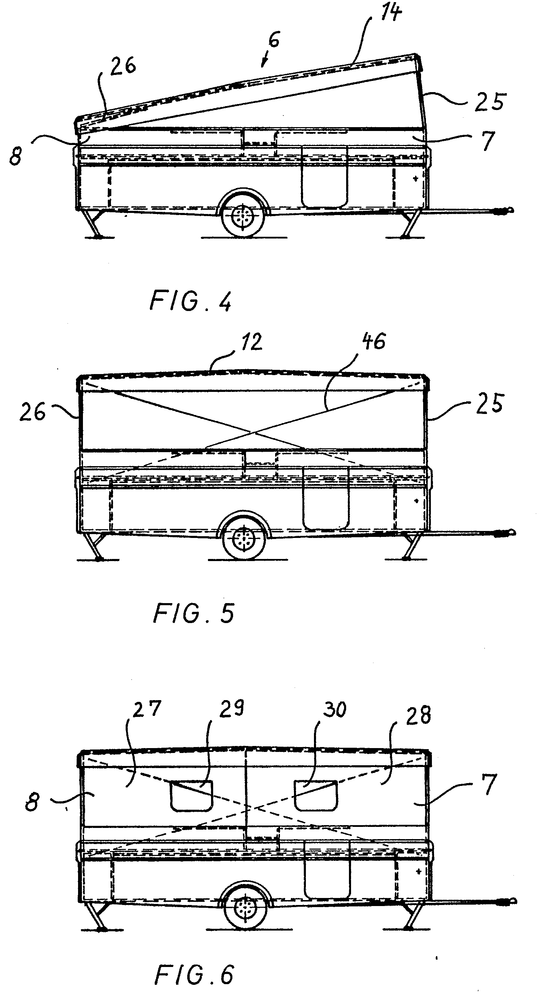

Ein ganz erheblicher Nachteil der gezeigten Ausführung besteht jedoch darin, daß beim Ausziehen der Schlafkojenunterteile diese nach oben und nach der Seite hin offen sind (siehe Fig. 6, linke Schlafkoje). Wenn der Wohnwagen in einer (durchaus üblichen) Situation bei Regen aufgebaut würde, wären die seitlichen Schlafkojenunterteile wegen des fehlenden Daches während des Ausschiebevorgangs dem Regen ausgesetzt. Matratzen, Bettzeug, etc. kann somit nicht auf den Schlafkojenbodenteilen verbleiben. Dies ist bei der dargestellten Ausführungsform (siehe Fig. 4) auch gar nicht vorgesehen, da die Klappwände der Kojenteile in die wannenartige Ausbildung des Kojenbodenteils eingeklappt werden müssen und somit ohnehin kein Platz für Matratzen etc. im zusammengeklappten Zustand vorhanden ist. Das heißt, daß auch die Ausstattung und Einrichtung der Schlafkojen völlig ausgeräumt und anderweitig verstaut werden muß. Insgesamt gesehen sind beim Auf- und Abbau des bekannten Wohnwagens sowohl im mittleren Bereich als auch in den Schlafkojen erhebliche zusätzliche Arbeiten und Handgriffe für das Umräumen und Verstauen von Einrichtungsgegenständen notwendig und beim Aufbau bei Regen werden die Schlafbereiche naß, bzw. der Wohnwagen kann bei Regen nicht aufgestellt werden.

Aufgabe der Erfindung ist es demgegenüber, ein gattungsgemäßes Campingfahrzeug so auszubilden, daß beim Auf- und Abbau möglichst wenig an der Inneneinrichtung zu verändern ist und die Schlafkojen beim Auf- und Abbau vor Regen geschützt sind.

Diese Aufgabe wird mit den kennzeichnenden Merkmalen des Anspruchs 1 gelöst.

Gemäß Anspruch 1 sollen die Klappachsen der Klappwände am mittleren Unterbau unterhalb der Schiebekante der Schlafkojen liegen, so daß die Klappwände des mittleren Unterbaus im zusammengeschobenen Zustand unter dem Bodenteil der zweiten Einheit liegen. Damit wird erreicht, daß auch auf den Klappwänden Hängeschränke, Klapptische, etc. fest angebracht sein können, die dann beim Zusammenklappen in einem freien Raum unterhalb der Kojenbodenplatten zu liegen kommen. Weiter ist wenigstens eine Klappwand der Schlafkojen im aufgeklappten, jedoch noch zusammengeschobenen Zustand mit der verschiebbaren Dachplatte verbindbar. Beim Ausschieben der Schlafkojen wird daher die jeweilige verschiebbare Dachplatte zugleich mitausgeschoben, so daß die Schlafkoje während des Ausschiebvorgangs abgedeckt ist. Da auch die Seitenwände der Schlafkoje (die erfindungsgemäß oben aufliegen) nach dem Anheben des mittleren Dachteils sofort aufgeklappt werden können, ist die Schlafkoje insgesamt nach allen Seiten gegen Witterungseinflüsse geschützt. Vorteilhaft kann daher die Einrichtung der Schlafkojen bestehend aus Matratzen, Bettzeug, daraufliegenden Wäscheteilen, etc. im auf- und abgebauten Zustand sowie während des Auf- und Abbaus unverändert belassen werden und ist zudem gegen Witterungseinflüsse geschützt.

Damit ist eine wesentliche Vereinfachung in der Handhabung erreicht, die eine wesentliche Voraussetzung dafür ist, daß eine Ausführung gemäß der Gattung vom Markt angenommen wird. Dies war bisher offensichtlich nicht der Fall, da gattungsgemäße Wohnwagen bisher (zumindest in Europa) nicht verkauft werden.

Mit Anspruch 2 wird vorgeschlagen, durch eine geneigte Ausschiebefläche die zentrale Dachplatte beim Ausschieben der Schlafkojen anzuheben, so daß die zentrale Dachplatte beim Aufbau nicht bis zur endgültigen Stehhöhe sofort angehoben werden muß. Es ist jedoch auch ohne weiteres möglich, die Dachplatte mit schrägen, beispielsweise durch einen in Längsrichtung des Wohnwagens verlaufenden First, so zu versehen, daß beim Ausschieben der Schlafkojen die zentrale Dachplatte nicht angehoben wird. Diese muß dann zwar beim Aufbau sofort in die endgültige Höhe angehoben werden, dadurch wird aber das Ausschieben der Schlafkojen einfacher, insbesondere entfällt die Forderung nach der synchronen Bewegung der Schlafkojen; auch das im Ausführungsbeispiel beschriebene Schnurkreuz kann durch einfachere Haltemittel ersetzt werden.

Anhand einer Zeichnung wird ein Ausführungsbeispiel der Erfindung mit weiteren Merkmalen, Einzelheiten und Vorteilen näher beschrieben.

Es zeigen
Fig. 1 eine Seitenansicht eines Wohnwagens in der Transportstellung,

Fig. 2 eine Rückansicht des Wohnwagens nach Fig. 1,

Fig. 3 eine Draufsicht des Wohnwagens nach Fig. 1 und Fig. 2,

Fig. 4 eine Stellung mit seitlich angehobenem Dach,

0126293

Fig. 5 eine Stellung mit beidseitig angehobenem
Dach,

Fig. 6 eine Stellung mit aufgeklappten Seitenwänden in
den verschiebbaren Einheiten,

Fig. 7 eine Stellung mit ausgeklappten Führungsschienen,

Fig. 8 die Stellung in Fig. 7 in der Draufsicht,

Fig. 9 eine Stellung mit ausgeschobenen Schlafkojen,

Fig. 10 eine Stellung mit aufgeklappten Mittelwänden,

Fig. 11 eine Stellung mit aufgeklappten Abteilwänden für
die Schlafkojen,

Fig. 12 eine perspektivische Ansicht des aufgebauten
Wohnwagens.

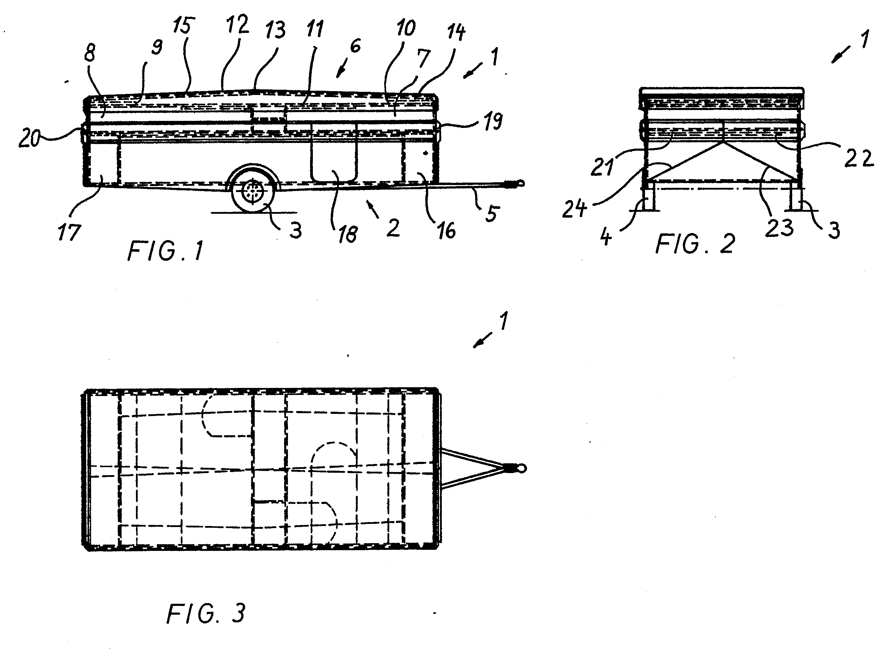

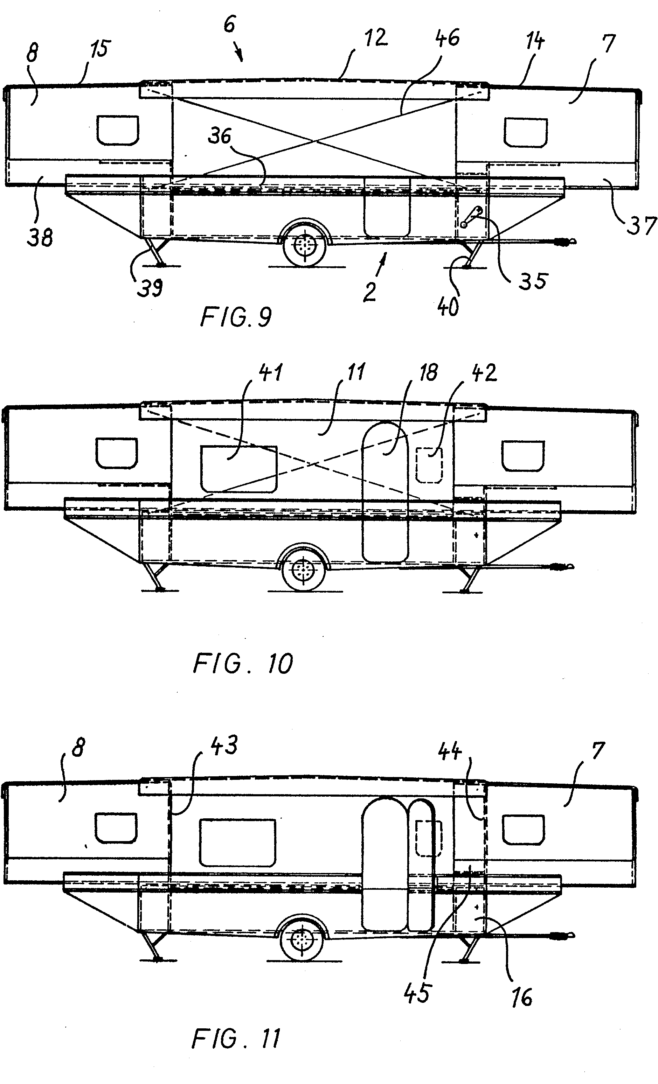

In Fig. 1 ist ein Wohnwagen 1 dargestellt, der im wesentlichen aus einem Unterbau 2 mit Rädern 3, 4, einer Anhängekupplung 5, einem Dachteil 6, zwei verschiebbaren Schlafkojen 7, 8 mit Klappwänden 9, 10, und mit Klappwänden 11 am Unterbau 2 besteht. Das Dachteil 6 enthält eine obere Dachplatte 12, die den Unterbau 2 abdeckt mit einem First 13 quer zur Fahrtrichtung und zwei in Längsrichtung ausziehbare Seitendachplatten 14, 15, die unter der zentralen Dachplatte 12 eingeschoben sind. An der Vorder- und Rückseite des Wohnwagens 1 sind je ein Stauraum 16 für Gas, Wasser etc., und ein Stauraum 17 für Gepäck etc. zu erkennen. Die Schlafkojen 7, 8 werden so weit ausgeschoben (siehe Fig. 9), daß die Stauräume 16, 17 noch überdeckt sind. Weiter sind in Fig. 1 der untere Teil einer Eingangstür 18 und an die Vorder- und Rückseite angeklappte Führungsschienenverlängerungen 19, 20 zu sehen.

0126293

Aus der Rückansicht des Wohnwagens 1 gemäß Fig. 2 geht hervor, daß die rückwärtige Führungsschienenverlängerung 20 aus zwei geklappten Teilen 21, 22 mit schrägen Streben 23, 24 besteht.

In der Draufsicht auf den Wohnwagen 1 nach Fig. 3 sind die geklappten Wände für die Schlafkojen 7, 8 und den Unterbau 2 strichliert eingezeichnet. Die Lagen, Klapprichtungen und Funktionen werden im einzelnen im Zusammenhang mit den nachfolgenden Figuren und der Beschreibung klar werden.

In Fig. 4 ist zum Aufstellen des Wohnwagens 1 das Dachteil 6 an der rechten Seite angehoben und durch eine mit Scharnieren an der vorderen Schlafkoje 7 verbundene Klappwand 25 abgestützt. Die Klappwand 25 wird an der Oberseite mit der eingeschobenen Seitendachplatte 14 verbunden.

Anschließend wird auch die hintere Seite des Dachteils 6 angehoben und durch eine Klappwand 26 an der hinteren Schlafkoje 8 unterstützt (siehe Fig. 5). Um den zentralen Dachbereich gegen ein Verschieben zu sichern, wird ein Schnurkreuz 46 so angebracht, daß zwei Enden am Unterbau 2 und zwei Enden an der oberen Dachplatte 12 verspannt sind.

In Fig. 6 sind die Seitenklappwände 27, 28 mit Fenstern 29, 30 zu beiden Seiten hochgeklappt. Die Seitenklappwände 27, 28 und die Klappwände 25, 26 werden miteinander mit Beschlägen fest verbunden, so daß sich stabile Schlafkojenbereiche ergeben.

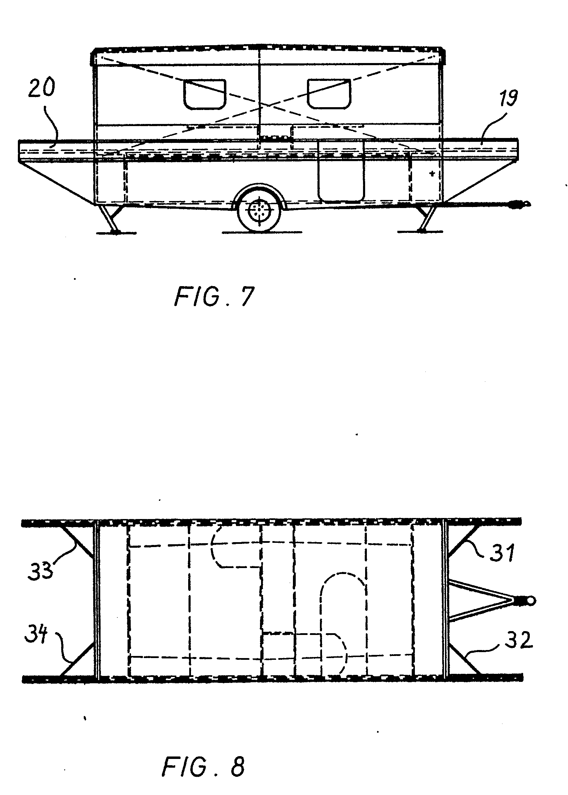

Anschließend werden die seitlichen Führungsschienenverlängerungen 19, 20 in Richtung der Längsachse, wie in den Fig. 7 und 8 dargestellt, geklappt. Aus der Draufsicht gemäß Fig. 8 ist zu ersehen, daß für eine verbesserte Seitenstabilisierung Streben 31 bis 34 vom Unterbau 2 zu den Führungsschienenverlängerungen 19, 20 vorgesehen sind. Bei einem Vergleich der Fig. 3 mit der Fig. 8 ist deutlich zu erkennen, wie die bereits aufgeklappten Wände 25, 26 und die vier Seitenwände 27, 28 im zugeklappten Zustand oberhalb der Bodenteile der Schlafkojen 7, 8 liegen.

Mit den bisher beschriebenen wenigen Handgriffen ist der Wohnwagen 1 zum Ausschieben der beiden Schlafkojen 7, 8 vorbereitet.

In Fig. 9 ist der Wohnwagen 1 bereits mit ausgefahrenen Schlafkojen 7, 8 gezeigt. Das seitliche Verfahren geschieht synchron mit Hilfe einer Kurbel 35, die auf eine (nicht dargestellte) Welle von außen her aufgesteckt wird. Die Kurbel 35 könnte mit einem bekannten Zahnstangen- oder Schneckentrieb verbunden sein, der in der Führungsschiene 36 am Unterbau 2 angebracht sein könnte. Eine einfache Form einer Zug- und Schiebeeinrichtung könnte darin bestehen, daß auf der der Kurbel 35 nachgeschalteten Welle für jede der Schlafkojen 7, 8 ein Seil aufwickelbar ist, das mit dem Boden jeder Schlafkoje 7, 8 an dessen Vorder- und Rückseite verbunden ist. Beim Ausschieben der Schlafkojen 7, 8 wäre damit jeweils das zur Mitte des Wohnwagens hin gerichtete Seilstück auf Zug beansprucht, während sich das andere Seilstück zur Außenseite der Schlafkojen 7, 8 hin abwickeln würde. Beim Zusammenschieben wären die Seilspannungen dagegen umgekehrt. Bei einer geeigneten Seilführung und Umlenkung über Rollen kann dieser Auf- bzw. Abwickelvorgang für beide Schlafkojen 7, 8 gleichzeitig mit einer Kurbelwelle erfolgen. Dadurch ist ein gleichzeitiges und synchrones Ausfahren der beiden Schlafkojen 7, 8 möglich. In dem dargestellten Ausführungsbeispiel ist dies notwendig, da die zentrale Dachplatte beidseitig nach vorne und hinten geneigt ist. Beim Ausfahren der Schlafkojen 7, 8 werden die Seitendachplatten 14, 15 über den Schlafkojen 7, 8 mit aus dem Dachteil 6 geschoben und zugleich die zentrale Dachplatte 12 wegen ihrer Längsneigungen zur gewünschten Stehhöhe angehoben. Wenn die beiden Schlafkojen 7, 8 nicht gleichzeitig und synchron ausgefahren werden, besteht die Gefahr, daß die Platten in der Dachschräge verkanten. Das Schnurkreuz 46 ist dazu da, die zentrale Dachplatte 12 während des Ausfahrvorgangs in ihrer Mittelposition zu halten.

Aus Fig. 9 ist gut zu erkennen, daß der Unterbau 2 etwa wannenförmig ist und in dieser Wanne (nicht eingezeichnete) Sitzgelegenheiten etc. angebracht sein können, die durch die Ausschiebebewegung der höher gelegenen Unterteile 37, 38 nicht berührt werden. Das bedeutet auch, daß der wannenartige Unterbau 2 als Stauraum während des Transports genutzt werden kann. Die Schlafkojen 7, 8 werden gegen einen Anschlag so weit ausgefahren, daß sie noch zum Teil über dem Unterbau 2 in der Führungsschiene 36 verbleiben. Die unter dem Überdeckungsbereich verbleibenden Räume sind durch Wände abgeteilt und bilden die Stauräume 16, 17, die auch während der Campingzeit benutzt werden können. Zusätzlich ist zu erkennen, daß die Unterteile 37, 38 der Schlafkojen 7, 8 die Form von flachen Kästen haben, in denen Matratzen und Bettzeug auch bei abgeklappten Schlafkojenwänden gut Platz haben. Die Betten brauchen zudem weder beim Zusammenbau noch beim Aufbau in den Schlafkojen 7, 8 verändert werden. Für eine gute Stabilität im ausgeschobenen Zustand sind stabile Stützen 39, 40 zwischen Aufstandsfläche und Unterbau erforderlich. Es könnten auch noch zusätzliche Stützen an den Schlafkojen 7, 8 vorgesehen sein.

Durch das Ausschieben der Schlafkojen 7, 8 sind Öffnungen in den Seitenwänden entstanden, die durch Hochklappen der mittleren Klappwände 11 beiderseits geschlossen werden. Die in Blickrichtung liegende Wand 11 enthält auch den oberen Teil des Türausschnitts der Eingangstür 18 (siehe Fig. 10). Weiter enthalten die Klappwände 11 Fenster 41,
42.

In Fig. 11 ist der Wohnwagen 1 bereits in vollständig
aufgebautem Zustand gezeigt. Dazu wurden noch die in den
Schlafkojen 7, 8 liegenden Abteilklappwände 43, 44 hochgeklappt, wodurch der zentrale Wohnbereich und die Schlafkojen 7, 8 voneinander getrennt sind. Aus Fig. 11 ist
deutlich zu erkennen, daß die Schlafkoje 8 größer dimensioniert ist, d. h. die Abteilklappwand 43 weiter zur
Wohnwagenmitte hin angebracht ist als bei der Schlafkoje
7. Dies ist dadurch bedingt, daß mit der Schlafkoje 7
zum Wohnbereich hin ein Küchenblock 45 mit Kochplatte etc.
bereits in der richtigen Arbeitshöhe verbunden ist und
beim Ausschieben der Schlafkoje 7 mit dieser über den
Stauraum 16 bewegt wird. Im Stauraum 16 werden daher
zweckmäßig die für den Küchenbetrieb erforderlichen
Geräte, wie Gasflasche, Wasserbehälter etc. aufbewahrt.
Bei der gezeigten Ausführung eines Wohnwagens 1 braucht
daher auch der Küchenblock 45 weder abgesenkt noch umgebaut zu werden.

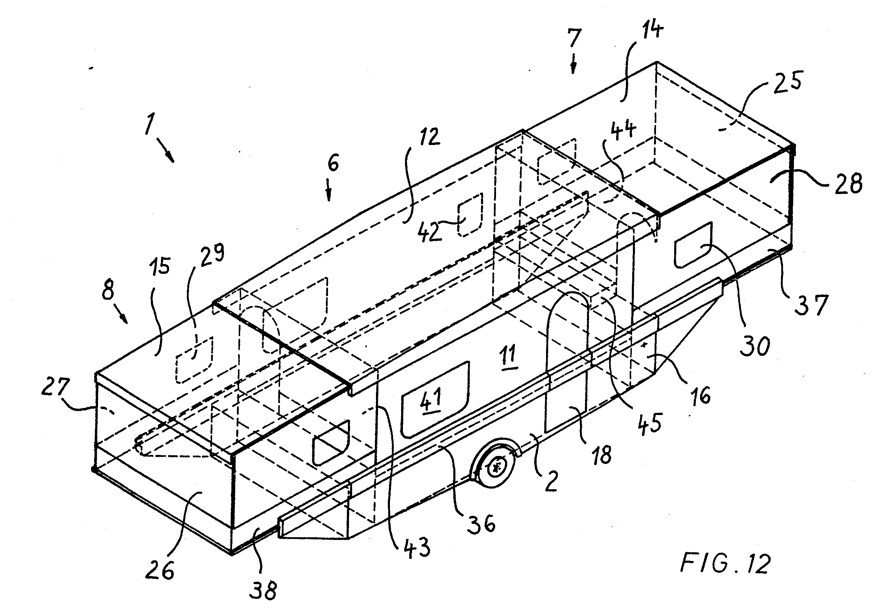

In der perspektivischen Ansicht der Fig. 12 sind mit Hilfe
der strichlierten Linien die einzelnen Wände und Bereiche
nochmals klar zu erkennen. In der Mitte liegt der zentrale
Wohnbereich in Stehhöhe mit dem Unterbau 2, den seitlichen Führungsschienen 36, der Eingangstür 18, der zentralen Dachplatte 12, den seitlichen Klappwänden 11 und den
Fenstern 41, 42. Die hintere Schlafkoje 8 enthält das
kastenförmige Unterteil 38, die hintere Klappwand 26 die
seitlichen Klappwände 27 mit Fenstern 29, die Seitendachplatte 15 und die Abteilklappwand 43 mit einem Türbogenausschnitt.

Die vordere, kleinere Schlafkoje 7 enthält ebenfalls
das kastenförmige Unterteil 37, die vordere Klappwand 25,
die seitlichen Klappwände 28 mit Fenstern 30, die Seitendachplatte 14 und die Abteilklappwand 44 mit einem Rundbogenausschnitt. Weiter ist der mit der Schlafkoje 7 verschiebbare Küchenblock 45 über dem Stauraum 16 zu erkennen.

Zusammenfassend sollen nochmals die einzelnen Schritte zum Aufbau des Wohnwagens 1 zusammengestellt nacheinander aufgeführt werden: Der zusammengelegte Wohnwagen wird an seinen Standplatz geschleppt; die Stützen 39, 40 werden ausgeklappt; der Wohnwagen 1 wird abgehängt; das Dachteil 6 wird angehoben und durch die Klappwände 25, 26 gehalten; die seitlichen Klappwände 27, 28 der Schlafkojen 7, 8 werden aufgeklappt und mit den Klappwänden 25, 26 verbunden; das Schnurkreuz 46 wird angebracht; die Führungsschienenverlängerungen 19, 20 werden ausgeklappt und verriegelt; mit Hilfe der abnehmbaren Kurbel 35 werden die Schlafkojen 7, 8 ausgeschoben; die mittleren Klappwände 11 werden hochgeklappt; die Abteilklappwände 43, 44 werden hochgeklappt. Die vorbeschriebenen Handgriffe sind in wenigen Minuten durchführbar, wobei aus dem zusammengelegten und zusammengeschobenen Wohnwagen gemäß Fig. 1 der Wohnwagen gemäß Fig. 12 mit einem enormen Platzangebot entsteht. Es soll nocheinmal herausgestellt werden, daß an der Inneneinrichtung des Wohnwagens 1 dabei weder im Wohnbereich noch in den Schlafkojen größere Umstellungen und Umbauarbeiten erforderlich sind, da durch die gegenseitig vertikal versetzten Steh- und Liegeflächen die Wohnwageneinrichtung weder beim Auf- noch beim Zusammenbau verändert zu werden braucht.

**Herr**

**Klaus Parthum**

**Schulweg 9**

**8079 Egweil**

Fauststraße 30
D-8070 Ingolstadt

Telefon (08 41) 7 24 12
Telegramm neupat Ingolstadt
Telex 5 5809 nepa d

P 48PA 84/26

## Patentansprüche

1. Campingfahrzeug (Wohnwagen, Campingmobil oder Huckepackaufsatz eines Campingmobils)
mit wenigstens zwei Wohneinheiten, wobei über eine Einheit (Unterbau 2) wenigstens eine zweite Einheit (Schlafkojen 7, 8) auf Führungsschienen schiebbar ist,
die Führungsschienen an gegenüberliegenden Seiten des Unterbaus in einem vertikalen Abstand nach oben zu dessen Bodenfläche (Stehfläche) angebracht sind,
die Einheiten (Unterbau und Schlafkojen) mit Klappwänden, die nach oben klappbar sind, versehen sind und
mit einer den Unterbau überdeckenden zentralen Dachplatte, in die oder unter die die verschiebbaren Einheiten (Schlafkojen) überdeckende Dachplatten einschiebbar sind,

dadurch gekennzeichnet,

daß die Klappachsen der Klappwände an der ersten Einheit (Unterbau 2) unterhalb der Schiebekante der

2

0126293

wenigstens zweiten Einheit (Schlafkojen 7, 8) liegen, so daß die Klappwände der ersten Einheit (Unterbau 2) im zusammengeschobenen Zustand unter dem Bodenteil der zweiten Einheit (Schlafkojen 7, 8) liegen und

daß wenigstens eine Klappwand der verschiebbaren Einheit (Schlafkojen 7, 8) im aufgeklappten und zusammengeschobenen Zustand mit der verschiebbaren Dachplatte (14, 15) verbindbar ist, so daß bei Ausschieben der verschiebbaren Einheit (Schlafkojen 7, 8) zugleich die verschiebbare Dachplatte (14, 15) mitausgeschoben wird.

2. Campingfahrzeug nach Anspruch 1, dadurch gekennzeichnet, daß die zentrale Dachplatte (12) wenigstens eine in Ausschieberichtung geneigte Fläche aufweist, an der die ausschiebbare Einheit (Schlafkojen 7, 8) gleitet, so daß beim Ausschieben die zentrale Dachplatte (12) angehoben wird.

0126293

FIG. 1

FIG. 2

FIG. 3

2/5    0126293

FIG. 4

FIG. 5

FIG.6

FIG . 7

FIG . 8

0126293

FIG. 9

FIG. 10

FIG. 11

FIG.12

0126293

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 677 600  (CHARRON) <br> * Spalte 2, Zeilen 16-36, 49-55; Figuren 6, 7 * | 1 | B 60 P  3/34 |
| P,X | DE-U-8 311 886  (PARTHUM) <br> * Ganzes Dokument * | 1,2 | |
| A | DE-A-2 839 075  (CONSORTIUM GENERAL TEXTILE) <br> * Figuren 1-4 * | 2 | |
| D,A | US-A-3 709 551  (McCARTHY) | | |

RECHERCHIERTE SACHGEBIETE (Int. Cl. ³)

B 60 P  3/00

Der vorliegende Recherchenbericht wurde für alle Patentansprüche erstellt.

| Recherchenort <br> BERLIN | Abschlußdatum der Recherche <br> 17-07-1984 | Prüfer <br> LUDWIG H J |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82